(19) Europäisches Patentamt / European Patent Office / Office européen des brevets

(11) **EP 1 895 321 A1**

(12) **EUROPEAN PATENT APPLICATION**
published in accordance with Art. 153(4) EPC

(43) Date of publication:
**05.03.2008 Bulletin 2008/10**

(51) Int Cl.:
*G01S 5/14* (2006.01)  *H04Q 7/34* (2006.01)

(21) Application number: **06766913.5**

(22) Date of filing: **19.06.2006**

(86) International application number:
**PCT/JP2006/312249**

(87) International publication number:
**WO 2006/137364 (28.12.2006 Gazette 2006/52)**

(84) Designated Contracting States:
**DE FR GB**

(30) Priority: **22.06.2005 JP 2005181995**

(71) Applicant: **MITSUBISHI ELECTRIC CORPORATION**
**Chiyoda-ku**
**Tokyo 100-8310 (JP)**

(72) Inventor: **NAKAMOTO, Takayoshi**
**c/o Mitsubishi Electric Corp.**
**Tokyo 100-8310 (JP)**

(74) Representative: **Sajda, Wolf E. et al**
**Meissner, Bolte & Partner GbR**
**Postfach 86 06 24**
**81633 München (DE)**

(54) **COMMUNICATION DEVICE**

(57)    To propose a communication device capable of easily calibrating frequency error and obtaining position information with high accuracy. The communication device includes a frequency error detecting circuit that receives a reception signal, detects frequency error contained in the reception signal, and generates frequency error correction output, main frequency error correcting means that corrects the frequency error contained in the reception signal based on the frequency error correction output, and main correlation calculating means that performs calculation of correlation between reception output which frequency error has been corrected by the main frequency error correcting means and a pseudo random noise code, and a data processing circuit that outputs position information with respect to the radio wave source based on the output from the main correlation calculating means.

*FIG. 1*

EP 1 895 321 A1

**Description**

Technical Field

The present invention relates to a communication device having a positioning system which receives radio waves modulated by pseudo random noise codes from a radio wave source and calculates position information with respect to the radio wave source.

Background Art

A known satellite positioning system calculates position information with respect to a satellite as a radio wave source. A receiving circuit of a receiver (SPS receiver) of the satellite positioning system generally contains crystal oscillator. The satellite positioning system converts frequency of a receipt signal using an oscillation signal from the crystal oscillator to obtain the reception signal.

According to a related-art communication device of this type disclosed in JP2003-279 639A, for example, the SPS receiver contains a temperature sensor which detects the temperature inside the receiver. The detected output obtained by the temperature sensor is compared with a temperature characteristic curve of the crystal oscillator at the time of manufacture of the SPS receiver, and a frequency error of the crystal oscillator is calibrated based on the comparison. Correction of the frequency error of the crystal oscillator can be thus achieved by this calibration.

Patent Reference No. 1: JP2003-279639A

Disclosure of the Invention

Problems that the Invention is to Solve

According to the related art, however, it is necessary to individually calibrate the crystal oscillator contained in each SPS receiver during manufacture so that the frequency error can be corrected with high accuracy, which raises the manufacturing cost. In addition, even when the crystal oscillators contained in the SPS receivers to be manufactured are all calibrated, frequency errors caused by fluctuation characteristics of source voltage of the crystal oscillators and changes of the crystal oscillators with elapse of time cannot be corrected. Thus, high-accuracy positioning is difficult to be achieved.

The invention proposes a communication device which can improve these problems.

Means for Solving the Problems

A communication device according to the invention includes a positioning system that receives radio waves modulated by a pseudo random noise code from a radio wave source and calculates position information with respect to the radio wave source. In the communication device, the positioning system includes: a radio wave receiving circuit that receives the radio waves and generates a reception signal; a frequency error detecting circuit that receives the reception signal, detects a frequency error contained in the reception signal, and generates a frequency error correction output; main frequency error correcting means that correct the frequency error contained in the reception signal based on the frequency error correction output; main correlation calculating means that perform calculations of a correlation between the reception output the frequency error of which has been corrected by the main frequency error correcting means and the pseudo random noise code; and a data processing circuit that outputs the position information with respect to the radio wave source based on the output from the main correlation calculating means.

Advantage of the Invention

According to the communication device of the invention, the frequency error detecting circuit receives the reception signal from the radio wave receiving circuit, detects the frequency error contained in the reception signal, and generates the frequency error correction output. By this construction, the necessity for calibrating each receiving circuit during manufacture is eliminated, and thus the manufacturing cost is reduced. In addition, frequency errors due to source voltage fluctuation characteristics of an oscillator used in the receiving circuit and changes of the oscillator with elapse of time are similarly corrected. Thus, position information with high accuracy can be obtained.

Brief Description of the Drawings

Fig. 1    is a block circuit diagram showing a communication device in a first embodiment according to the invention.

Fig. 2    is a block circuit diagram showing the details of a frequency offset correcting unit and a frequency offset setting circuit in the first embodiment.

Fig. 3    illustrates input/output waveforms of a correlating unit in a frequency error detecting circuit in the first embodiment.

Fig. 4    illustrates processing waveforms of a DFT calculating unit in the frequency error detecting circuit in the first embodiment.

Fig. 5    shows DFT calculation result cumulative addition and frequency error detecting operation in the frequency error detecting circuit in the first embodiment.

Fig. 6    is a block circuit diagram showing a communication device in a second embodiment according to the invention.

Fig. 7    is a block circuit diagram showing the details of a frequency offset correcting unit and a frequency offset detecting circuit in the second embodiment.

Fig. 8    is a block circuit diagram showing a communication device in a third embodiment according to the invention.

Fig. 9    is a block circuit diagram showing the details of a frequency offset correcting unit and a frequency offset detecting circuit in the third embodiment.

Fig. 10    is a block circuit diagram showing a communication device in a fourth embodiment according to the invention.

Fig. 11    is a block circuit diagram showing the details of a frequency offset correcting unit and a frequency offset detecting circuit in the fourth embodiment.

Best Mode for Carrying Out the Invention

First Embodiment

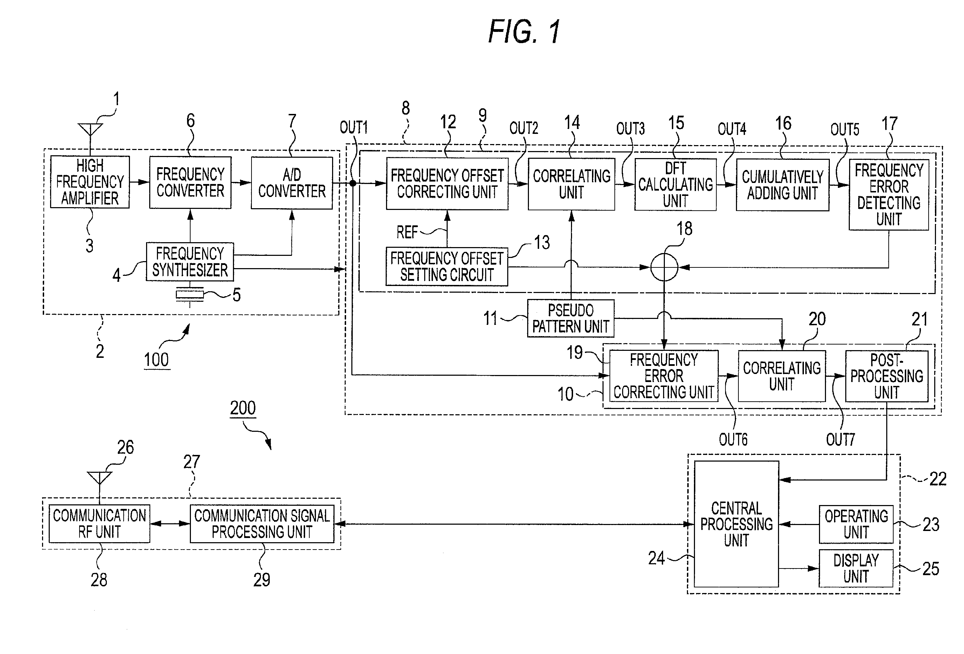

Fig. 1 is a block circuit diagram showing a communication device in a first embodiment according to the invention. The communication device in the first embodiment is a cellular phone, for example, but is similarly applicable to other various communication devices such as mobile information communication devices.

The communication device in the first embodiment is a cellular phone including a positioning system 100 and a communication system 200. The positioning system 100 has a function of calculating position information representing the position of the cellular phone with respect to a satellite using SPS, for example. The communication system 200 has a function of transmitting and receiving phone data to and from a communication base station.

The positioning system 100 includes an SPS reception antenna 1, an SPS radio wave reception circuit 2, an SPS reception signal processing unit 8, and a data processing circuit 22. The communication system 200 includes a wireless communication antenna 26, a data transmission and reception circuit 27, and a data processing circuit 22. The positioning system 100 and the communication system 200 co-use the data processing circuit 22.

The details of the positioning system 100 are initially discussed. The SPS reception antenna 1 receives satellite radio waves from a not-shown SPS satellite. The SPS radio wave reception circuit 2 has a high frequency amplifier 3, a frequency synthesizer 4, a crystal oscillator 5, a frequency converter 6, and an A/D converter 7. The high frequency amplifier 3 connected with the reception antenna 1 amplifies a high frequency reception signal received by the SPS reception antenna 1 from the SPS satellite.

The frequency synthesizer 4 multiplies a reference frequency containing frequency error in oscillation output supplied from the crystal oscillator 5, down-converts the amplified reception radio waves into waves having an arbitrary central frequency by the frequency converter 6 to obtain an SPS satellite reception signal, and samples the SPS satellite reception signal by the A/D converter 7. The sampled SPS satellite reception signal becomes an output signal OUT1 supplied from the A/D converter 7, and is input to the SPS reception signal processing unit 8. The frequency synthesizer 4 also supplies operation clock to the SPS reception signal processing unit 8.

The SPS reception signal processing unit 8 has a frequency error detecting circuit 9, a distance measuring circuit 10, and a pseudo pattern unit 11. The output signal OUT1 from the A/D converter 7 is input to the frequency error detecting circuit 9 and the distance measuring circuit 10. The frequency error detecting circuit 9 has a frequency offset correcting unit 12, a frequency offset setting circuit 13, a correlating unit 14, a DFT calculating unit 15, a cumulatively adding unit 16, a frequency error detecting unit 17, and an adder 18.

The frequency offset correcting unit 12 constitutes sub-frequency correcting means according to the invention, and supplies an output OUT2 to the correlating unit 14. The frequency offset setting circuit 13 constitutes frequency offset setting means, and supplies a frequency offset correcting signal REF to the frequency offset correcting unit 12 and the adder 18. The frequency offset correcting signal REF corresponds to a frequency correcting signal in the first embodiment.

The correlating unit 14 constitutes sub-correlation calculating means, and supplies an output OUT3 to the DFT calculating unit 15. The DEF calculating unit 15 constitutes frequency analyzing means, and supplies an output OUT4 to the cumulatively adding unit 15. The cumulatively adding unit 16 constitutes cumulatively adding means, and supplies an output OUT5 to the frequency error detecting unit 17. The frequency error detecting unit 17 supplies an output to the adder 18.

The frequency offset correcting unit 12 executes frequency error primary correction for the output signal OUT1 input to the frequency error detecting circuit 9 from the A/D converter 7 using the frequency offset correcting signal REF. The frequency error primary correction is approximate correction, that is, rough correction. The frequency offset correcting unit 12 corrects the frequency error by rotating the phase of the output signal OUT1 based on the frequency correcting signal REF.

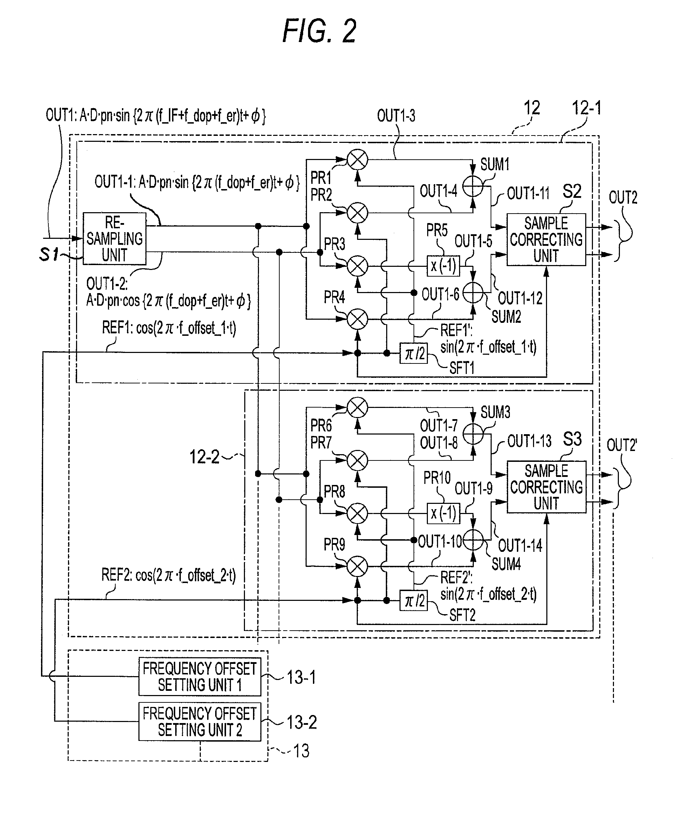

Fig. 2 is a block circuit diagram showing the details of the frequency offset correcting circuit 12 and the frequency offset setting circuit 13. As can be seen from Fig. 2, the frequency offset correcting unit 12 has a first frequency offset correcting unit 12-1 and a second frequency offset correcting unit 12-2, and the frequency offset setting circuit 13 has two frequency offset setting units 13-1 and 13-2. The frequency offset setting unit 13-1 generates a first frequency offset correcting signal REF1, and the frequency offset setting unit 13-2 generates a second frequency offset correcting signal REF2.

The first frequency offset correcting unit 12-1 has a re-sampling unit S1, five multipliers PR1 through PR5, a $\pi/2$ phase shifter SFT1, first and second adders (two adders) SUM1 and SUM2, and a sample correcting unit S2. The output OUT1 from the A/D converter 7 is supplied to the re-sampling unit S1, and the re-sampling unit S1 outputs a first sampling signal OUT 1-1 and a second sampling signal OUT1-2. The $\pi/2$ phase shifter SFT1 shifts the phase of the received first frequency offset correcting signal REF1 by $\pi/2$ and generates a resultant frequency offset correcting signal REF1'.

The multiplier PR1 receives the first sampling signal OUT1-1 and the frequency offset correcting signal REF1' from the $\pi/2$ phase shifter SFT1, and generates a first multiplication output OUT1-3. The multiplier PR4 receives the first sampling signal OUT 1-1 and the frequency offset correcting signal REF1, and generates a fourth multiplication output OUT1-6. The multiplier PR2 receives the second sampling signal OUT 1-2 and the first frequency offset correcting signal REF1, and generates a second multiplication output OUT1-4.

The multiplier PR3 receives the second sampling signal OUT1-2 and the frequency offset correcting signal REF1' from the $\pi/2$ phase shifter SFT1, and an output of the multiplier PR3 is connected with the multiplier PR5. The multiplier PR5 multiplies the received output by (-1), and generates a third multiplication output OUT 1-5.

The first adder SUM1 receives the first multiplication output OUT1-3 from the multiplier PR1 and the second multiplication output OUT1-4 from the multiplier PR2, and generates a first addition output OUT1-11.

The second adder SUM2 receives the third multiplication output OUT1-5 from the multiplier PR5 and the fourth multiplication output OUT1-6 from the multiplier PR4, and generates a second addition output OUT1-12. The sample correcting unit S2 receives the first and second addition outputs OUT1-11 and OUT1-12 from the first and second adders SUM1 and SUM2, and generates an output OUT2.

The second frequency offset correcting unit 12-2 has five multipliers PR6 through PR10, a $\pi/2$ phase shifter SFT2, third and fourth adders (two adders) SUM3 and SUM4, and a sample correcting unit S3. The $\pi/2$ phase shifter SFT2 shifts the phase of the received second frequency offset correcting signal REF2 by $\pi/2$ and generates a resultant frequency offset correcting signal REF2'.

The multiplier PR6 receives the first sampling signal OUT1-1 and the frequency offset correcting signal REF2' from the $\pi/2$ phase shifter SFT2, and generates a fifth multiplication output OUT1-7. The multiplier PR9 receives the first sampling signal OUT1-1 and the frequency offset correcting signal REF2, and generates an eighth multiplication output OUT1-10. The multiplier PR7 receives the second sampling signal OUT1-2 and the second frequency offset correcting signal REF2, and generates a sixth multiplication output OUT1-8. The multiplier PR8 receives the second sampling signal OUT1-2 and the frequency offset correcting signal REF2' from the $\pi/2$ phase shifter SFT2, an output of the multiplier PR8 is connected with the multiplier PR10. The multiplier PR10 multiplies the received output by (-1), and generates a seventh multiplication output OUT1-9.

The third adder SUM3 receives the fifth multiplication output OUT1-7 from the multiplier PR6 and the sixth multiplication output OUT1-8 from the multiplier PR7, and generates a third addition output OUT1-13. The fourth adder SUM4 receives the seventh multiplication output OUT1-9 from the multiplier PR10 and the eighth multiplication output OUT1-10 from the multiplier PR9, and generates a fourth addition output OUT1-14. The sample correcting unit S3 receives the third and fourth addition outputs OUT1-13 and OUT1-14 from the third and fourth adders SUM3 and SUM4, and generates an output OUT2'.

The operation of the frequency offset correcting unit 12 is now discussed. The output signal OUT1 from the A/D converter 7 is expressed by the following Equation 1:

$$OUT1 = A \cdot D \cdot pn \cdot \sin[2\pi(f\_IF + f\_dop + f\_er)t + \phi] \quad (Equation\ 1),$$

where A is a signal amplitude voltage, D is a bit value ($\pm$1) of navigation data bit included in the SPS satellite reception signal, i.e., the navigation data bit representing satellite orbit information or the like, and pn is a pseudo random noise code used for BPSK (Bit Phase Shift Keying) modulation for encoding the navigation data bit, which code is an identification code determined for each satellite. The code pn is specifically referred to as a CA code.

In the Equation 1, the product of A$\cdot$ D$\cdot$ pn is further multiplied by an IF (Intermediate Frequency) wave sin[$2\pi$ (f_IF+f_dop+f_er)t+$\phi$] as a PSK (Phase Shift Keying) modulated wave. The IF wave sin[$2\pi$(f_IF+f_dop+f_er)t+$\phi$] is a sine wave produced by adding the Doppler frequency f_dop and a crystal oscillator frequency error f_er to the central frequency f_IF of the IF wave and setting an initial phase $\phi$.

In the output signal OUT of A/D converter 7, the re-sampling unit S1 samples only amplitudes having the same phase as that of the central frequency f_IF, and outputs the first sampling signal OUT1-1 and the second sampling signal OUT 1-2 with respect to the output signal OUT 1 from the A/D converter 7. The first sampling signal OUT1-1 and the second sampling signal OUT1-2 are orthogonal to each other, and are expressed by the following Equation 2 and Equation 3:

$$\text{OUT1-1} = \text{A} \cdot \text{ D} \cdot \text{ pn} \cdot \text{ sin}[2\pi(\text{f\_dop+f\_er})t+\phi] \qquad \text{(Equation 2)}$$

$$\text{OUT1-2} = \text{A} \cdot \text{ D} \cdot \text{ pn} \cdot \text{ cos}[2\pi(\text{f\_dop+f\_er})t+\phi] \qquad \text{(Equation 3)}.$$

The frequency offset correcting unit 12 performs the frequency error primary correction using the first sampling signal OUT1-1 and the second sampling signal OUT1-2 output from the re-sampling unit S1, and the first and second frequency offset correcting signals REF1 and REF2 generated from the frequency offset setting unit 13-1 and 13-2 contained in the frequency offset setting circuit 13. The first frequency offset correcting signal REF1 is set to cos($2\pi$ f_ offset_1$\cdot$ t), and the second frequency offset correcting signal REF2 is set to cos($2\pi\cdot$ f_offset_2$\cdot$ t). The value f_offset_ 1 is the frequency offset value set by the frequency offset setting unit 13-1, and the value f_offset_2 is the frequency offset value set by the frequency offset setting unit 13-2.

As shown in Fig. 2, the frequency offset setting circuit 13 has the two frequency offset setting units 13-1 and 13-2 as an example. However, the number of the frequency offset setting units may be arbitrarily determined. For example, when the range $\pm$10 kHz is established at 1 kHz intervals, 21 frequency offset setting units are given. The following is the case where the frequency offset value f_offset_1 set by the frequency offset setting unit 13-1 is f_dop.

The multipliers PR1 through PR5 in the first frequency offset correcting unit 12-1 obtain the first, second, third, and fourth multiplication outputs OUT1-3, OUT1-4, OUT1-5, and OUT1-6 expressed by the following equations Equation 4 through Equation 7 using the first sampling signal OUT1-1, the second sampling signal OUT2-2, and the frequency offset correcting signal REF1:

$$\text{OUT1-3} = \text{A} \cdot \text{ D} \cdot \text{ pn} \cdot \text{ sin}[2\pi(\text{f\_dop+f\_er})t+\phi] \cdot \text{ sin}(2\pi \cdot \text{ f\_dop} \cdot \text{ t}) \quad \text{(Equation 4)}$$

$$\text{OUT1-4} = \text{A} \cdot \text{ D} \cdot \text{ pn} \cdot \text{ cos}[2\pi(\text{f\_dop+f\_er})t+\phi] \cdot \text{ cos}(2\pi \cdot \text{ f\_dop} \cdot \text{ t}) \quad \text{(Equation 5)}$$

$$\text{OUT1-5} = \text{A} \cdot \text{ D} \cdot \text{ pn} \cdot \text{ cos}[2\pi(\text{f\_dop+f\_er})t+\phi] \cdot \text{ sin}(2\pi \cdot \text{ f\_dop} \cdot \text{ t}) \quad \text{(Equation 6)}$$

$$\text{OUT1-6} = \text{A} \cdot \text{ D} \cdot \text{ pn} \cdot \text{ sin}[2\pi(\text{f\_dop+f\_er})t+\phi] \cdot \text{ cos}(2\pi \cdot \text{ f\_dop} \cdot \text{ t}) \quad \text{(Equation 7)}.$$

Next, the first and second adders SUM1 and SUM2 in the first frequency offset correcting unit 12-1 produce the first and second addition outputs OUT 1-11 and OUT 1-12 expressed by the following equations Equation 8 and Equation 9 using the first, second, third, and fourth multiplication outputs OUT1-3, OUT1-4, OUT1-5, and OUT1-6 to cancel the Doppler frequency f_dop:

$$OUT1\text{-}11 = A \cdot D \cdot pn \cdot \sin[2\pi(f\_dop+f\_er)t+\phi] \cdot \sin(2\pi \cdot f\_dop \cdot t)$$
$$+ A \cdot D \cdot pn \cdot \cos[2\pi(f\_dop+f\_er)t+\phi] \cdot \cos(2\pi \cdot f\_dop \cdot t)$$
$$= A \cdot D \cdot pn \cdot [\sin[2\pi(f\_dop+f\_er)t+\phi] \cdot \sin(2\pi \cdot f\_dop \cdot t)$$
$$+ \cos[2\pi(f\_dop+f\_er)t+\phi] \cdot \cos(2\pi \cdot f\_dop \cdot t)]$$
$$= A \cdot D \cdot pn \cdot \cos(2\pi \cdot f\_er \cdot t+\phi) \qquad \text{(Equation 8)}.$$

$$OUT1\text{-}12 = -A \cdot D \cdot pn \cdot \cos[2\pi(f\_dop+f\_er)t+\phi] \cdot \sin(2\pi \cdot f\_dop \cdot t)$$
$$+ A \cdot D \cdot pn \cdot \sin[2\pi(f\_dop+f\_er)t+\phi] \cdot \cos(2\pi \cdot f\_dop \cdot t)$$
$$= A \cdot D \cdot pn \cdot [-\cos[2\pi(f\_dop+f\_er)t+\phi] \cdot \sin(2\pi \cdot f\_dop \cdot t)$$
$$+ \sin[2\pi(f\_dop+f\_er)t+\phi] \cdot \cos(2\pi \cdot f\_dop \cdot t)]$$
$$= A \cdot D \cdot pn \cdot \sin(2\pi \cdot f\_er \cdot t+\phi) \qquad \text{(Equation 9)}.$$

The sample correcting unit S2 corrects the code lengths of the PRN codes pn of the first and second addition outputs OUT 1-11 and OUT 1-12 based on the frequency offset f_dop. When the obtained code lengths are pn', the output OUT2 from the frequency offset correcting unit 12 in Fig. 1 is obtained and the same phase (I) component OUT2-I of the output OUT2 and the orthogonal phase (Q) component OUT2-Q of the output OUT2 are expressed by the following equations Equation 10 and Equation 11:

$$OUT2\text{-}I = A \cdot D \cdot pn' \cdot \cos(2\pi \cdot f\_er \cdot t+\phi) \qquad \text{(Equation 10)}$$

$$OUT2\text{-}Q = A \cdot D \cdot pn' \cdot \sin(2\pi \cdot f\_er \cdot t+\phi) \qquad \text{(Equation 11)}.$$

The second frequency offset correcting unit 12-2 performs calculation similar to that performed by the first frequency offset correcting unit 12-1 to obtain the output OUT2'. The output OUT2' is processed by the correlating unit 14, DFT calculating unit 15, cumulatively adding unit 16, and frequency error detecting unit 17 in the frequency error detecting circuit 9 similarly to the output OUT2.

The output OUT2 from the sub-frequency error correcting means, that is, the frequency offset correcting unit 12 in Fig. 1 is input to the correlation calculation means, that is, the correlating unit 14. The correlating unit 14 obtains the correlating unit output from the convolution integral or convolution sum of the output OUT2 and the PRN code produced by the pseudo pattern unit 11 as individual code of the satellite.

When the correlating unit output is OUT3, the same phase (I) component OUT3-I of the output OUT3 and the orthogonal (Q) component OUT3-Q of the output OUT3 are expressed by the following equations Equation 12 and Equation 13. In the equations Equation 12 and Equation 13, Rpn is the cross-correlation function of the reception signal and pseudo pattern code.

$$OUT3\text{-}I = A \cdot D \cdot Rpn \cdot \cos(2\pi \cdot f\_er \cdot t+\phi)$$
$$= \int [A \cdot D \cdot pn' \cdot \cos(2\pi \cdot f\_er \cdot t+\phi) \cdot pn]dt \qquad \text{(Equation 12)}$$

$$OUT3\text{-}Q = A \cdot D \cdot Rpn \cdot \sin(2\pi \cdot f\_er \cdot t+\phi)$$
$$= \int [A \cdot D \cdot pn' \cdot \sin(2\pi \cdot f\_er \cdot t+\phi) \cdot pn]dt \qquad \text{(Equation 13)}.$$

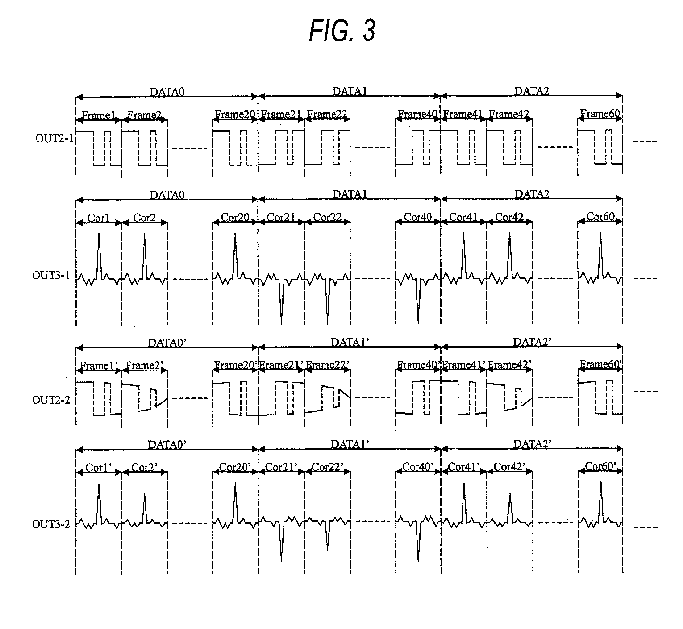

Fig. 3 shows waveform examples of the correlating unit output OUT3. These are examples of the same phase (I) component OUT3-I only. The output OUT2-1 is an output from the frequency offset correcting unit 12 when the crystal oscillator frequency error f_er is zero. The output OUT3-1 is a correlating unit output from the correlating unit 14 in the same case.

The output OUT2-2 is an output from the frequency offset correcting unit 12 when the crystal oscillator frequency error f_er is not zero. The output OUT3-2 is a correlating unit output from the correlating unit 14 in the same case. The orthogonal (Q) component OUT3-Q has waveforms whose phase is orthogonal to that of the same phase (I) component OUT 3-I.

C/A codes 1 through 60 frames in the output OUT2-1 under the condition where the crystal oscillator frequency error f_er is zero are determined as Frame 1 through 60, and C/A codes 1 through 60 frames in the output OUT2-2 under the condition where the crystal oscillator frequency error f_er is not zero are determined as Frame 0' through 60'. The unit of 20 frames of C/A codes (Frame 1 through 20, 21 through 40, 41 through 60, and Frame 0' through 20', 21' through 40', 41' through 60') corresponds to one bit length of the navigation data bit.

When the crystal oscillator frequency error f_er is zero in the output OUT3-1, correlating unit outputs Cor0 through 60 are output with the same repetition as the PRN code cycle length. In the output OUT3-1, sharp peaks are obtained at the points corresponding to the phase deviation between the SPS reception signal and the pseudo pattern. When the crystal oscillator frequency error f_er is not zero in the output OUT3-2, peaks of the correlating unit output waveforms Cor 0' through 60' exhibit periodical fluctuations due to the effect of the crystal oscillator frequency error.

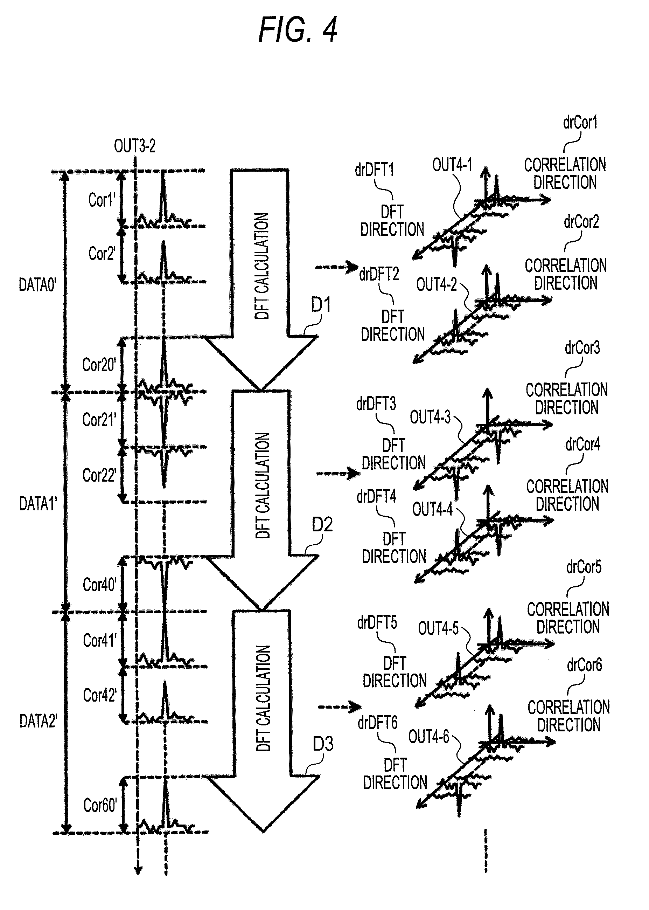

The correlating unit output OUT3 in Fig. 1 is input to the frequency analyzing means, that is, the DFT calculating unit 15. The DFT calculating unit 15 develops correlating unit outputs Cor 1' through 60' in parallel as shown in Fig. 4, and performs DFT (discrete Fourier transformation) calculations D1 through D3 for the units of 20 frames. The respective DFT calculations produce DFT calculation result real parts OUT4-1, OUT4-3, OUT4-5, and DFT calculation result imaginary parts OUT4-2, OUT4-4, and OUT4-6, which have two axes of DFT direction drDFT 1 through drDFT 6 and correlation direction drCor 1 through drCor 60.

In case of DFT calculation D1, for example, the correlating unit outputs Cor 1' through Cor 20' developed in parallel have the same phase component with respect to the C/A code cross-correlation function. Thus, calculation is performed for only a component containing the crystal oscillator frequency error f_er in the DFT calculation result. The DFT calculation for the correlating unit output OUT3-1 is executed by the following equations Equation 14 and Equation 15. The Equation 14 represents the DFT calculation result real part OUT4-I in the correlating unit output OUT3-1, and the Equation 15 represents the DFT calculation result imaginary part OUT4-Q in the correlating unit output OUT3-1.

$$ \text{OUT4-1} = \text{Re}[\int A \cdot D \cdot \cos(2\pi \cdot f\_er \cdot t + \phi) \cdot \exp(-j \cdot 2 \cdot \pi \cdot f \cdot t) dt] \quad \text{(Equation 14)} $$

$$ \text{OUT4-2} : \text{Im}[\int A \cdot D \cdot \cos(2\pi \cdot f\_er \cdot t + \phi) \cdot \exp(-j \cdot 2 \cdot \pi \cdot f \cdot t) dt] \quad \text{(Equation 15)}, $$

where Re[#] is a real part of #, Im[#] is a calculator for extracting imaginary part of #, and ∫[#]dt is integral calculation.

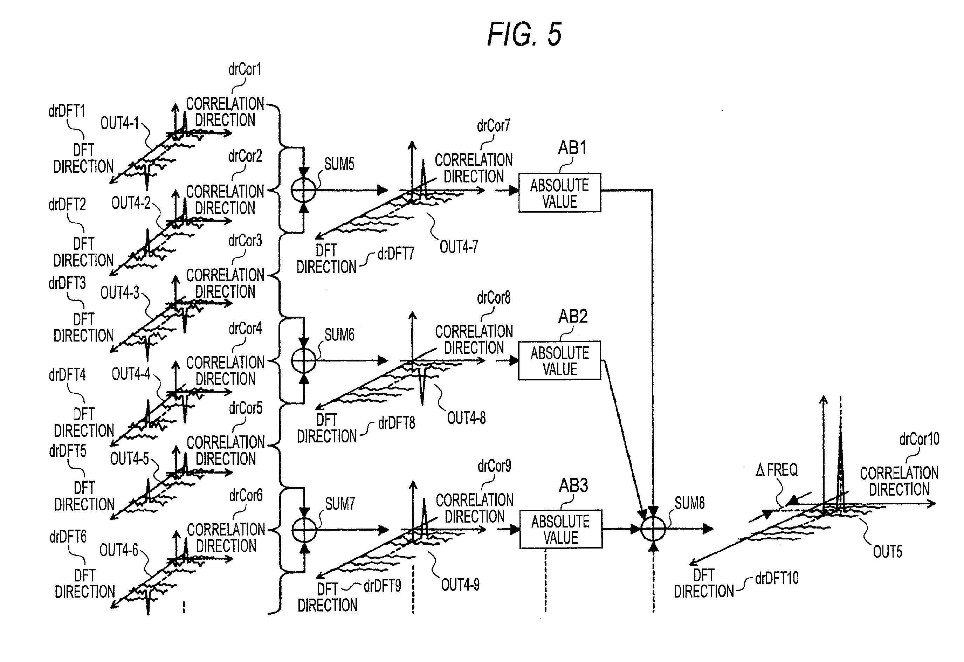

The DFT calculation result OUT4 is input to the cumulatively adding means in Fig. 1, that is, the cumulatively adding unit 16. Fig. 5 shows the cumulative adding operation in the cumulative adding unit 16 and the frequency error detecting operation in the frequency error detecting unit 17. The operations in Fig. 5 contain the operations performed by the adders SUM5 through SUM8 and by absolute value processing units AB1 through AB3.

The adder SUM5 synthesizes the DFT calculation result real part OUT4-1 and the DFT calculation result OUT4-2 to obtain a DFT calculation synthesis result OUT4-7. The adder SUM6 synthesizes the DFT calculation result real part OUT4-3 and the DFT calculation result OUT4-4 to obtain a DFT calculation synthesis result OUT4-8. The adder SUM7 synthesizes the DFT calculation result real part OUT4-5 and the DFT calculation result OUT4-6 to obtain a DFT calculation synthesis result OUT4-9.

The absolute value processing units AB1 through AB3 obtain absolute values of the DFT calculation synthesis result OUT4-7 through OUT4-9 to equalize the positive-negative direction of the output in the navigation data bit. The adder SUM8 adds these DFT calculation synthesis results after absolute value processing to obtain a DFT calculation absolute value addition result OUT5. The value ΔFREQ providing the peak output in the DFT direction drDFT10 of the DFT calculation absolute value addition result OUT5 corresponds to the crystal oscillator frequency error detection result, thus ΔFREQ=f_er.

The crystal oscillator frequency error detection result ΔFREQ is output from the frequency error detecting unit 17. It is possible to increase the output intensities of the DFT calculation result OUT4-1 through 4-6 by the absolute value addition processing of the adder SUM8, and thus detect the crystal oscillator frequency error with high sensitivity and high accuracy under the weak electric field environment.

As can be seen from Fig. 1, the distance measuring circuit 10 includes a frequency error correcting unit 19, a collating unit 20, a post-processing unit 21. The frequency error correcting unit 19 constitutes main frequency error correcting means in the invention. The adder 18 synthesizes the crystal oscillator frequency error detection result ΔFREQ=f_er obtained from the frequency error detecting unit 17 and the frequency offset value f_dop obtained from the frequency offset setting circuit 13 and having produced the detection result ΔFREQ in the frequency error detecting circuit 9.

The addition output from the adder 18 is input to the main frequency error correcting means, that is, the frequency error correcting unit 19. Similarly to the frequency offset correcting unit 12, the frequency error correcting unit 19 rotates the phase of the output signal OUT1 from the A/D converter 7 to correct the frequency error of the output signal OUT1 with high accuracy by the addition output from the adder 18 and generate a frequency error correcting unit output OUT6 with the addition output from the adder 18.

The addition output from the adder 18, that is, the addition output as the sum of the crystal oscillator frequency error detection result ΔFREQ and the frequency offset f_dop from the frequency offset setting circuit 13 is frequency error having higher accuracy than that of the frequency offset value. The main frequency error correcting means, that is, the frequency error correcting unit 19 performs highly accurate frequency error correction.

The frequency error correcting unit output OUT6 is input to the correlating unit 20. The post-processing unit 21 calculates pseudo distance data between the SPS satellite and the SPS receiver. The data processing circuit 22 executes positioning calculation.

As shown in Fig. 1, the data processing circuit 22 has a central processing unit 24, and an operating unit 23 and a display unit 25 connected with the central processing unit 24. The pseudo distance data from the post-processing unit 21 of the distance measuring circuit 10 is supplied to the central processing unit 24. The central processing unit 24 calculates information about the position with respect to the satellite based on the pseudo distance data, and displays the information on the display unit 25, for example.

The sub-frequency error correcting means in the first embodiment, that is, the frequency offset correcting unit 12 per one satellite requires 1st through 41 st frequency offset correcting units (forty-one units) in parallel for detecting the frequency error produced by synthesizing the crystal oscillator frequency error f_er and the Doppler frequency f_dop when the frequency primary correction is performed for the frequency error of ±10 kHz in total at intervals of 500 Hz (allowable frequency error for obtaining peak output in correlating unit output) assuming that the crystal oscillator frequency error ΔFREQ=f_er is a value in the range of ±5 kHz and that the Doppler frequency f_dop is a value in the range of ±5 kHz.

The data transmission and reception circuit 27 in the communication system 200 in the first embodiment has a communication RF unit 28, and a communication signal processing unit 29. The communication RF unit 28 is connected with the wireless communication antenna 26. The communication signal processing circuit 29 is connected with the communication RF unit 28 and the central processing unit 24 of the data processing circuit 22. The communication system 200 exchanges communication data such as phone information with a not-shown communication base station. The central processing unit 24 controls the communication data exchange. The display unit 25 is also used for communication data display.

According to the communication device in the first embodiment described above, the frequency error detecting circuit 9 receives the reception signal from the radio wave reception circuit 2. The frequency error detecting circuit 9 detects the frequency error contained in the reception signal and generates the frequency error correction output ΔFREQ. The main frequency correcting means 19 corrects the frequency error contained in the reception signal based on the frequency error correction output.

The main correlation calculating means 20 performs correlation calculation between the reception output which frequency error has been corrected and the pseudo random noise code. The data processing circuit 22 calculates the position information with respect to the satellite. Thus, the necessity for calibrating each receiving circuit during manufacture is eliminated. As a result, the manufacturing cost is reduced, frequency errors due to source voltage fluctuation characteristics of the oscillator 5 and changes of the oscillator 5 with elapse of time used in the receiving circuit are similarly corrected. Accordingly, position information with high accuracy can be obtained.

The frequency error of the oscillator 5 is detected by cumulating the output OUT4 of the frequency analyzing means 15 for a long time using the cumulatively adding means 16 even under the environment that satellite radio waves from the SPS satellite generate weak electric field such as indoor environment. Then, the frequency error of the reception output is corrected by using the obtained frequency error correction output ΔFREQ. Thus, stable and highly accurate positioning can be achieved.

Second Embodiment

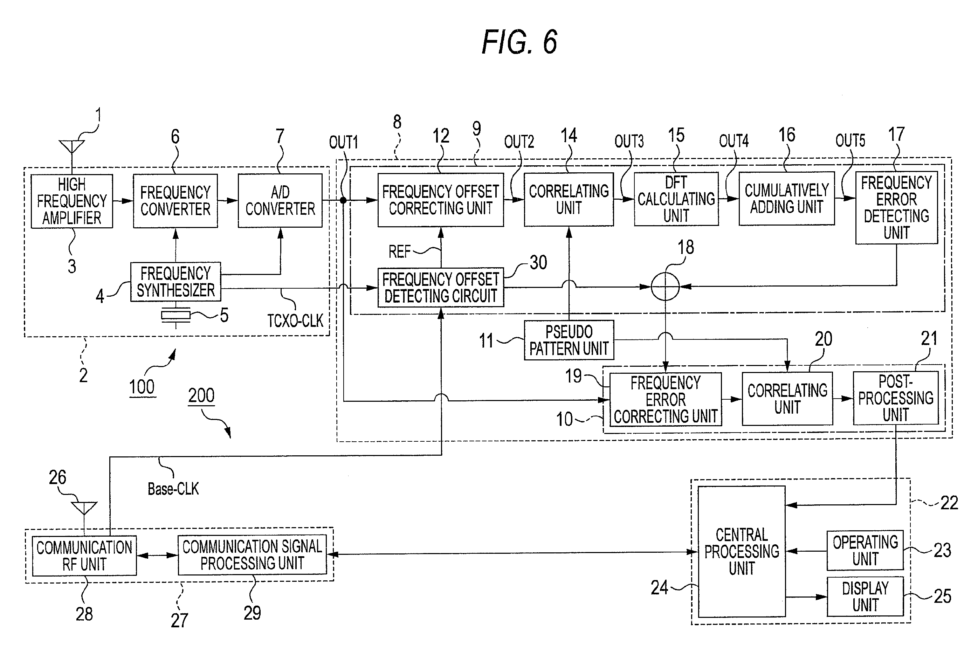

Fig. 6 is a block circuit diagram showing a communication device in a second embodiment according to the invention. According to the second embodiment, a frequency offset detecting circuit 30 is used instead of the frequency offset setting circuit 13 used in the frequency error detecting circuit 9 in the first embodiment, and a crystal oscillator reference clock TCXO-CLK from the frequency synthesizer 4 and a basis clock Base-CLK from the communication RF unit 28 in the communication system 200 are supplied to the frequency offset detecting circuit 30. The other parts are constructed as same as the first embodiment.

In the first embodiment, the frequency offset setting circuit 13 in Fig. 1 sets plural frequency offsets, and the sub-frequency error correcting unit, that is, the frequency offset correcting unit 12 performs the frequency primary correction for the reception signal from the A/D converter 7 according to the set frequency offsets. In the second embodiment, however, the frequency offset detecting circuit 30 of Fig. 6 counts the crystal oscillator reference clock TCXO-CLK from the frequency synthesizer 4 using the basis clock BASE-CLK from the communication RF unit 28 to detect the frequency offset with high accuracy.

In this case, a clock synchronized with the radio waves received by the wireless communication antenna 26 or a clock generated from a highly accurate oscillator mounted on the communication RF unit 28 is used for the high accuracy basis clock Base-CLK.

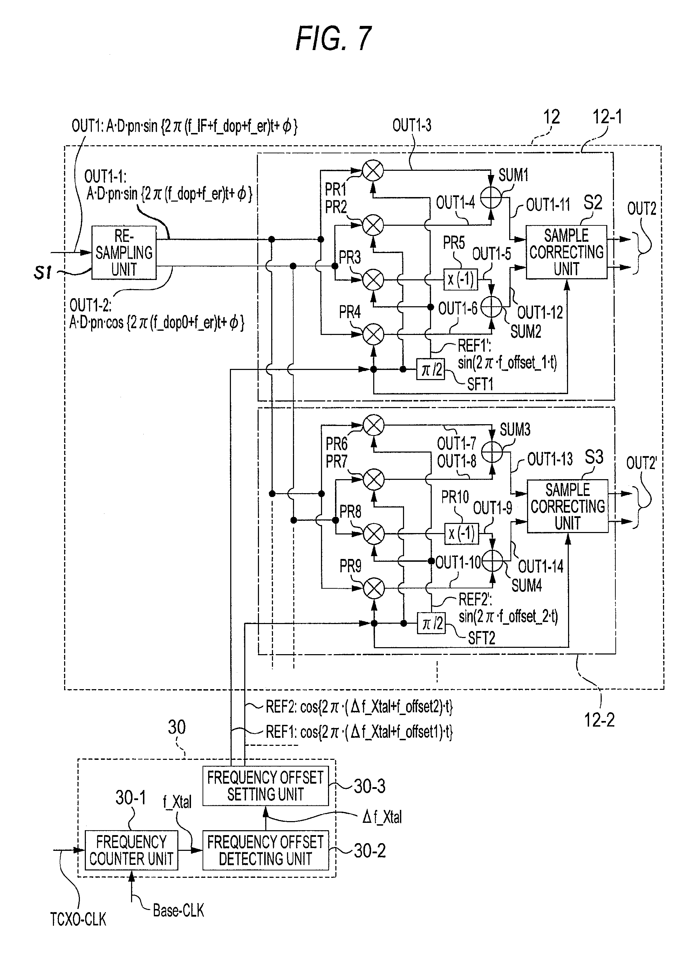

Fig. 7 is a block circuit diagram showing the details of the frequency offset correcting unit 12 and the frequency offset detecting unit 30 in the second embodiment. The frequency offset correcting unit 12 in Fig. 7 constitutes the sub-frequency error correcting means in the invention, and has the same structure as that in the first embodiment. The frequency offset detecting circuit 30 in the second embodiment has a frequency counter unit 30-1, a frequency offset detecting unit 30-2, and a frequency offset setting unit 30-3 as shown in Fig. 7.

The frequency counter unit 30-1 receives the crystal oscillator reference clock TCXO-CLKT from the frequency synthesizer 4, and the basis clock Base-CLK from the communication RF unit 28. The frequency counter unit 30-1 counts the crystal oscillator reference clock TCXO-CLK using the basis clock Base-CLK, and outputs a frequency count value f_Xtal to the frequency offset detecting unit 30-2.

The frequency offset detecting unit 30-2 detects a frequency error $\Delta$f_Xtal of the frequency count value f_Xtal and supplies the frequency error $\Delta$f_Xtal to the frequency offset setting unit 30-3. The frequency offset setting unit 30-3 gives bias to the frequency error $\Delta$f_Xtal, and sets the resultant values as frequency offset correcting values REF1 and REF2 input to the frequency offset correcting unit 12.

Then, the multipliers PR1 through PR10 in the first and second frequency offset correcting units 12-1 and 12-2 perform calculations similar to those in the first embodiment to execute frequency correction for the output OUT1 from the A/D converter 7. Advantages similar to those in the first embodiment can be provided in the second embodiment.

In the sub-frequency error correcting means, that is, the frequency offset correcting unit 12 in the second embodiment, the crystal oscillator frequency error f_er is detected as $\Delta$f_Xtal and corrected when the crystal oscillation frequency error f_er and the Doppler frequency f_dop are values in the range $\pm$5 kHz.

Thus, the frequency primary correction for the Doppler frequency f_dop is performed at intervals of 500 Hz (allowable frequency error for obtaining peak output in correlating unit output), and the 1 st through 21 st frequency offset correcting units (twenty-one units) in parallel are required for the frequency offset correcting unit 12 per one satellite. The sub-frequency error correcting means, that is, the frequency offset correcting unit 12 in the second embodiment has a more simplified structure than that in the first embodiment.

Third Embodiment

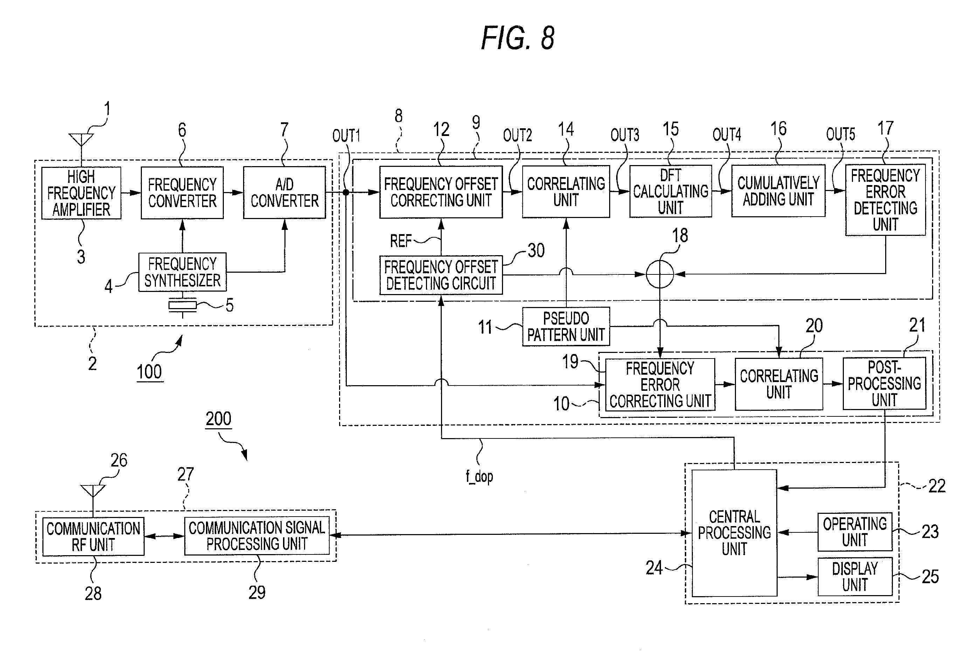

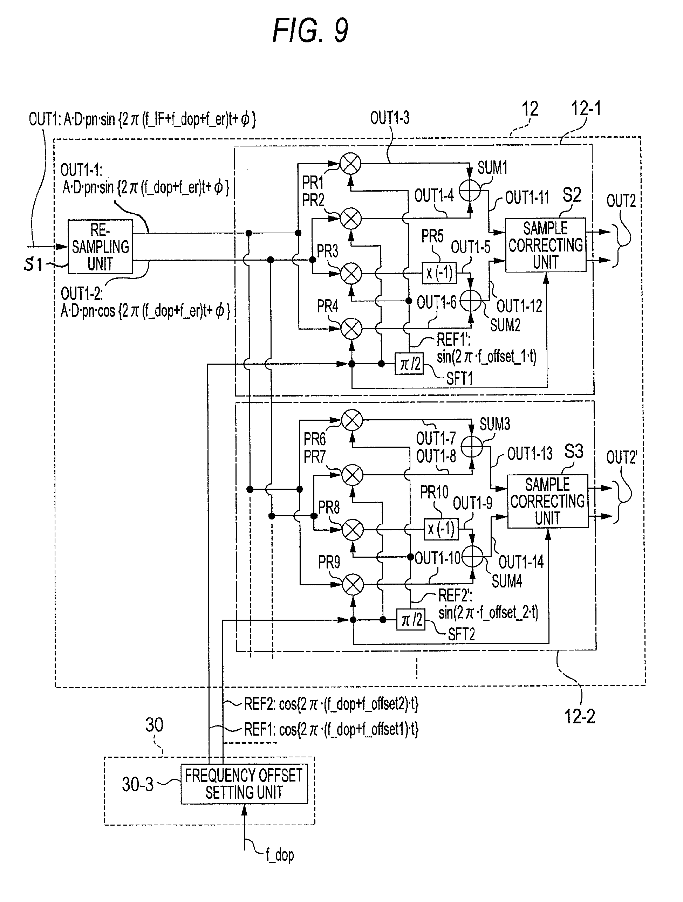

Fig. 8 is a block circuit diagram showing a communication device in a third embodiment according to the invention, and Fig. 9 is a block circuit diagram showing the details of the frequency offset correcting unit 12 and the frequency offset detecting circuit 30 in the third embodiment. According to the third embodiment, the Doppler frequency f_dop is supplied from the central processing unit 24 in the data processing circuit 22 to the frequency offset detecting circuit 30.

The frequency offset detecting circuit 30 has the frequency offset setting unit 30-3, and the Doppler frequency f_dop is given to the frequency offset setting unit 30-3. In the third embodiment, the frequency counter unit 30-1 and the frequency offset detecting unit 30-2 shown in Fig. 7 are excluded from the frequency offset detecting circuit 30. Other parts are constructed as same as the first and second embodiments.

In the second embodiment, the frequency offset detecting circuit 30 counts the crystal oscillator reference clock TCXO-CLK from the frequency synthesizer 4 using the basis clock Base-CLK from the communication RF unit 28 to detect frequency offset with high accuracy. In the third embodiment, however, the Doppler frequency f_dop calculated by the central processing unit 24 is input to the frequency offset setting unit 30-3. The Doppler frequency f_dop is calculated by the central processing unit 24 based on the satellite information received by the wireless communication antenna 26 in the data transmission and reception circuit 27, or the satellite information stored in the central processing unit 24.

The frequency offset setting unit 30-3 adds the frequency offset value to the Doppler frequency f_dop, and the resultant frequency offset signals REF1 and REF2 are input to the frequency offset correcting unit 12. Then, the multipliers PR1 through PR10 in the frequency offset correcting units 12-1 and 12-2 perform calculations similar to those in the first embodiment to execute frequency correction of the output OUT1 received from the A/D converter 7. In the third embodiment, advantages similar to those in the first embodiment can be provided.

In the sub-frequency error correcting means, that is, the frequency offset correcting unit 12 in the third embodiment, the Doppler frequency f_dop is detected and corrected when the crystal oscillation frequency error f_er and the Doppler frequency f_dop are values in the range $\pm 5$ kHz. Thus, the frequency primary correction for the crystal oscillation frequency error f_er is performed at intervals of 500 Hz (allowable frequency error for obtaining peak output in correlating unit output), and the 1st through 21 st frequency offset correcting units (twenty-one units) in parallel are required for the frequency offset correcting unit 12 per one satellite. The sub-frequency error correcting means, that is, the frequency offset correcting unit 12 in the third embodiment has a more simplified structure than that in the first embodiment.

Fourth Embodiment

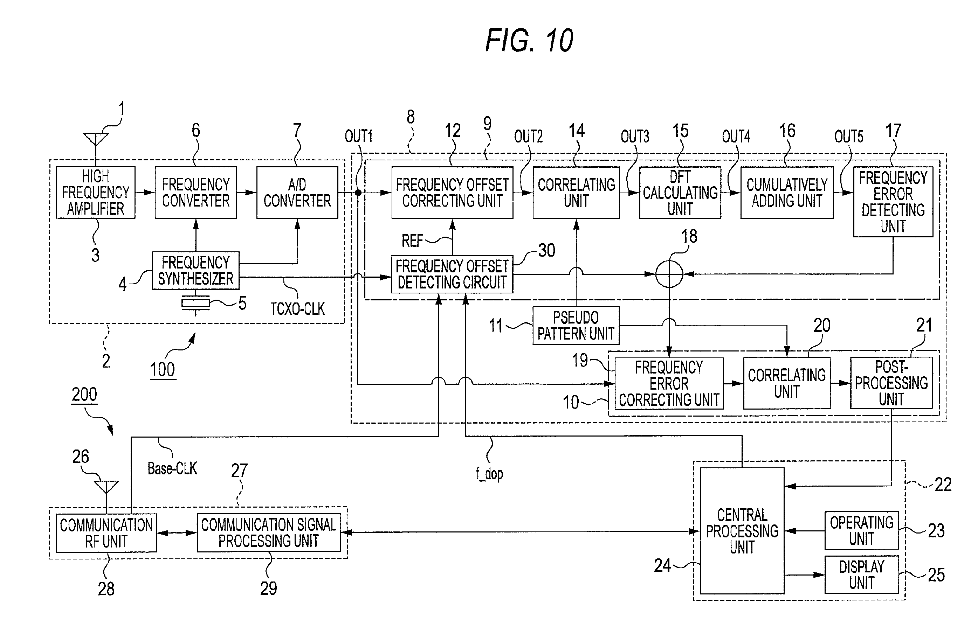

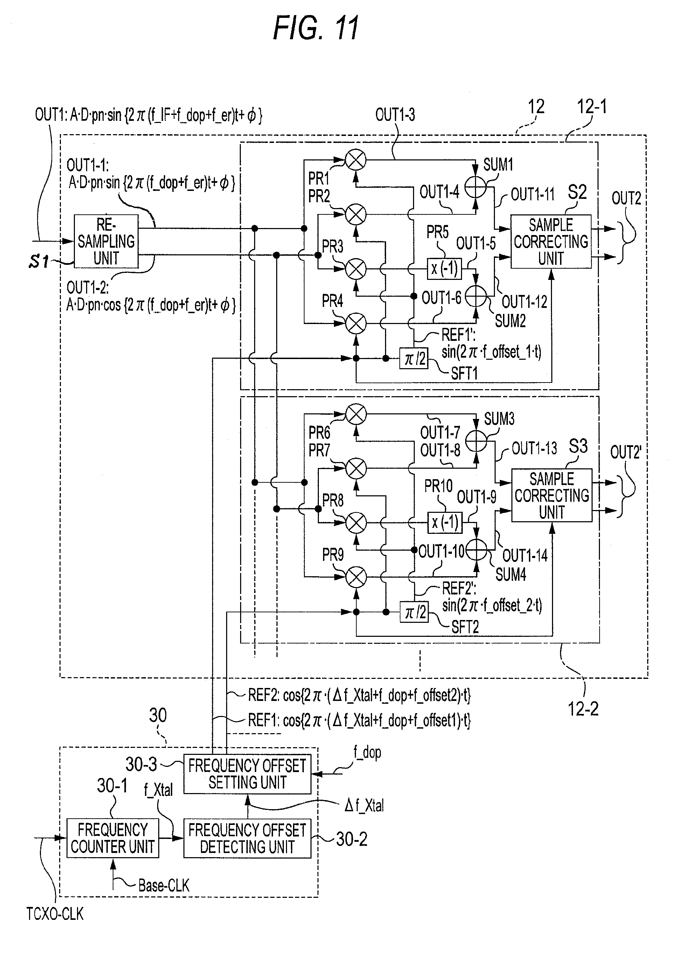

Fig. 10 is a block circuit diagram showing a communication device in a fourth embodiment according to the invention, and Fig. 11 is a block diagram showing the details of the frequency offset correcting unit 12 and the frequency offset detecting circuit 30 in the fourth embodiment. According to the fourth embodiment, the frequency offset detecting circuit 30 detects frequency offset using the crystal oscillator reference clock TCXO-CLK from the frequency synthesizer 4, the basis clock Base-CLK from the communication RF unit 28, and the Doppler frequency f_dop from the central processing unit 24.

In the fourth embodiment, the frequency offset detecting circuit 30 having the frequency counter unit 30-1, the frequency offset detecting unit 30-2, and the frequency offset setting unit 30-3 is used similarly to the second embodiment. The crystal oscillator reference clock TCXO-CLK from the frequency synthesizer 4 and the basis clock Base-CLK from the communication RF unit 28 are supplied to the frequency counter 30-1 similarly to the second embodiment. Then, the frequency counter unit 30-1 supplies the frequency count value f_Xtal to the frequency offset detecting unit 30-2. The frequency offset detecting unit 30-2 detects the frequency error $\Delta$f_Xtal of the frequency count value f_Xtal, and the frequency offset setting unit 30-3 adds the frequency offset value to the frequency error $\Delta$f_Xtal similarly to the second embodiment. The frequency offset setting unit 30-3 receives the Doppler frequency f_dop from the central processing unit 24 similarly to the third embodiment. Other parts are constructed as same as the first embodiment. In the fourth embodiment, advantages similar to those in the first embodiment can be provided.

In the sub-frequency error correcting means, that is, the frequency offset correcting unit 12 in the fourth embodiment, both the crystal oscillator frequency error f_er and the Doppler frequency f_dop are detected and corrected when the crystal oscillation frequency error f_er and the Doppler frequency f_dop are values in the range $\pm 5$ kHz. Thus, the frequency offset correcting unit 12 per one satellite has a single structure. Accordingly, the sub-frequency error correcting means, that is, the frequency offset correcting unit 12 has a further simplified structure.

The communication devices described in the first through fourth embodiments output position information with respect to the satellite using the satellite radio waves transmitted from the satellite. However, these devices can utilize a communication base station other than the satellite which transmits radio waves containing similar identification codes, such as a code division multi-connection type communication base station, as a radio wave source, and output the position information with respect to the radio wave source.

Industrial Applicability

The invention is applicable to various communication devices such as cellular phones and mobile information communication devices.

**Claims**

1. A communication device, comprising:

    a positioning system that receives radio waves modulated by a pseudo random noise code from a radio wave source and calculates position information with respect to the radio wave source,

    wherein the positioning system includes
    a radio wave receiving circuit that receives the radio waves and generates a reception signal;
    a frequency error detecting circuit that receives the reception signal, detects frequency error contained in the reception signal, and generates frequency error correction output;

main frequency error correcting means that corrects the frequency error contained in the reception signal based on the frequency error correction output;

main correlation calculating means that performs calculation of correlation between reception output which frequency error has been corrected by the main frequency error correcting means and the pseudo random noise code; and

a data processing circuit that outputs the position information with respect to the radio wave source based on the output from the main correlation calculating means.

2. The communication device according to claim 1, wherein

the frequency error detecting circuit has sub-frequency error correcting means;

the sub-frequency error correcting means receives the reception signal and corrects the frequency error contained in the reception signal based on a frequency correcting signal generated in the communication device; and

the frequency error detecting circuit detects high accuracy frequency error based on the reception signal which frequency error has been corrected by the sub-frequency error correcting means and produces the frequency correction output by using the high accuracy frequency error.

3. The communication device according to claim 2, wherein the frequency correcting signal is produced based on a frequency offset supplied from a frequency offset setting circuit provided in the communication device.

4. The communication device according to claim 2, wherein the frequency correcting signal is produced based on Doppler frequency calculated by the data processing circuit.

5. The communication device according to claim 2, wherein

a communication system that communicates with a communication base station is provided;

the communication system generates a reference frequency signal; and

the frequency correcting signal is produced based on the reference frequency signal.

6. The communication device according to claim 2, wherein

a communication system that communicates with a communication base station is provided;

the communication system generates a reference frequency signal; and

the frequency correcting signal is produced based on the reference frequency signal from the communication system and Doppler frequency calculated by the data processing circuit.

7. The communication device according to claim 2, wherein the sub-frequency error correcting means rotates phase of the reception signal based on the frequency correcting signal to correct the frequency error.

8. The communication device according to claim 2, wherein the main frequency error correcting means rotates phase of the reception signal based on the frequency error correction output to correct the frequency error.

9. The communication device according to claim 8, wherein

the frequency error detecting circuit has sub-correlation calculating means that performs calculation of correlation between the reception signal which frequency error has been corrected by the sub-frequency error correcting means and the pseudo random noise code, and frequency analyzing means that performs frequency analysis for correlation output from the sub-correlation calculating means; and

the frequency error detecting circuit detects the high accuracy frequency error based on output from the frequency analyzing means, and adds the frequency correcting signal to the high accuracy frequency error to generate the frequency correction output.

10. The communication device according to claim 8, wherein

the frequency error detecting circuit has sub-correlation calculating means that performs calculation of correlation between the reception signal which frequency error has been corrected by the sub-frequency error correcting means and the pseudo random noise code, frequency analyzing means that performs frequency analysis for correlation output from the sub-correlation calculating means, and cumulatively adding means that cumulatively adds output from the frequency analyzing means for a period of reception; and

the frequency error detecting circuit detects the high accuracy frequency error based on output from the cumulatively adding means, and adds the frequency correcting signal to the high accuracy frequency error to generate the frequency correction output.

FIG. 1

EP 1 895 321 A1

## FIG. 2

OUT1: $A \cdot D \cdot pn \cdot \sin\{2\pi(f\_IF+f\_dop+f\_er)t+\phi\}$

OUT1-3

12   12-1

SUM1

OUT1-1: $A \cdot D \cdot pn \cdot \sin\{2\pi(f\_dop+f\_er)t+\phi\}$

PR1
PR2        OUT1-4        OUT1-11   S2   OUT2

RE-
SAMPLING
UNIT

PR3        PR5   OUT1-5

$\times(-1)$

OUT1-2:
$A \cdot D \cdot pn \cdot \cos\{2\pi(f\_dop+f\_er)t+\phi\}$

SAMPLE
CORRECTING
UNIT

S1

PR4        OUT1-6        OUT1-12
SUM2

REF1: $\cos(2\pi \cdot f\_offset\_1 \cdot t)$

REF1':
$\sin(2\pi \cdot f\_offset\_1 \cdot t)$

$\pi/2$

SFT1

SUM3

PR6        OUT1-7
PR7        OUT1-8        OUT1-13   S3   OUT2'

12-2

PR8        PR10   OUT1-9

$\times(-1)$

SAMPLE
CORRECTING
UNIT

PR9        OUT1-10        OUT1-14
SUM4

REF2: $\cos(2\pi \cdot f\_offset\_2 \cdot t)$

REF2':
$\sin(2\pi \cdot f\_offset\_2 \cdot t)$

$\pi/2$

SFT2

FREQUENCY OFFSET
SETTING UNIT 1          13-1

FREQUENCY OFFSET
SETTING UNIT 2          13-2

13

# FIG. 3

EP 1 895 321 A1

## FIG. 4

15

FIG. 5

EP 1 895 321 A1

FIG. 6

EP 1 895 321 A1

## FIG. 7

FIG. 8

EP 1 895 321 A1

# FIG. 9

## FIG. 10

EP 1 895 321 A1

## FIG. 11

## INTERNATIONAL SEARCH REPORT

| | International application No. |
|---|---|
| | PCT/JP2006/312249 |

A.   CLASSIFICATION OF SUBJECT MATTER
*G01S5/14(2006.01)i, H04Q7/34(2006.01)i*

According to International Patent Classification (IPC) or to both national classification and IPC

B.   FIELDS SEARCHED

Minimum documentation searched (classification system followed by classification symbols)
G01S5/14, H04Q7/34

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2005-69764 A  (Nobuhiro KISHIMOTO),<br>17 March, 2005 (17.03.05),<br>Par. Nos. [0003] to [0004], [0028] to [0031],<br>[0037], [0080]<br>(Family: none) | 1-4,7,8<br>5,6,9,10 |
| Y | JP 5-297105 A  (Japan Radio Co., Ltd.),<br>12 November, 1993 (12.11.93),<br>Par. Nos. [0019], [0022] to [0027]<br>(Family: none) | 5,6 |
| Y | JP 2002-228737 A  (Mitsubishi Electric Corp.),<br>14 August, 2002 (14.08.02),<br>Par. Nos. [0043] to [0051], [0073] to [0080]<br>(Family: none) | 5,6 |

☒  Further documents are listed in the continuation of Box C.          ☐   See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    08 August, 2006 (08.08.06) | Date of mailing of the international search report<br>    15 August, 2006 (15.08.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/312249

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-21637 A (Mitsubishi Electric Corp.), 26 January, 2001 (26.01.01), Par. Nos. [0011] to [0012] & US 6392590 B1 | 9,10 |

Form PCT/ISA/210 (continuation of second sheet) (April 2005)

## INTERNATIONAL SEARCH REPORT

International application No.

PCT/JP2006/312249

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
    The international search has revealed that the invention of claims 1 and 2 is not novel since it is disclosed in document JP 2005-69764 A (Nobuhiro KISHIMOTO), 17 March, 2005 (17.03.05).
    Consequently, since the invention of claims 1 and 2 makes no contribution over the prior art, the common matter of the invention of claims 1 - 10, as described in the invention of claims 1 and 2, cannot be considered as a special technical matter within the meaning of PCT Rule 13.2, second sentence.
    (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**        ☐ The additional search fees were accompanied by the applicant's protest and, where applicable,
the                                                 payment of a protest fee..

                                ☐ The additional search fees were accompanied by the applicant's protest but the applicable protest
                                     fee was not paid within the time limit specified in the invitation.

                                ☐ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2006/312249 |

Continuation of Box No.III of continuation of first sheet(2)

Therefore, no common matter can be seen among all the inventions of claims 1 - 10. Therefore, since there exists no other common matter which can be considered as a special technical feature within the meaning of PCT Rule 13.2, second sentence, no technical relationship within the meaning of PCT Rule 13 between those different inventions can be seen.

Consequently, it is apparent that the inventions of claims 1 - 10 do not comply with the requirement of unity of invention.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003279639 A